# FASCICULE DE BREVET EUROPEEN

(11) **EP 1 269 377 B1**
(45) Date de publication et mention de la délivrance du brevet: **16.07.2008**
(21) Numéro de dépôt: 01919578.3
(22) Date de dépôt: 27.03.2001
(51) Int. Cl.: G06Q 90/00, G08B 1/08

(54) **DISPOSITIF D'INTERCOMMUNICATION SELECTIVE DE TERMINAUX MOBILES EN PROXIMITE PHYSIQUE, EGALEMENT RELIES PAR DES RESEAUX GLOBAUX**
SYSTEM ZUR SELEKTIVEN KOMMUNIKATION ZWISCHEN MOBILEN ENDGERÄTEN, DIE SICH IN DER NÄHE BEFINDEN, UND DIE MIT GLOBALEN NETZWERKEN VERBUNDEN SIND
SELECTIVE INTERCOMMUNICATION DEVICE FOR MOBILE TERMINALS IN PHYSICAL PROXIMITY, ALSO LINKED BY GLOBAL NETWORKS

(30) Priorité: 28.03.2000 FR 0003890
(43) Date de publication de la demande: 02.01.2003
(73) Titulaire: Collot, Laurent, 75012 Paris (FR)
(72) Inventeur: Collot, Laurent, 75012 Paris (FR)
(74) Mandataire: Callon de Lamarck, Jean-Robert
(86) Numéro de dépôt international: PCT/FR2001/000925
(87) Numéro de publication internationale: WO 2001/073622

(56) Documents cités:
- EP-A- 0 715 419
- WO-A-00/11793
- WO-A-97/49192
- WO-A-99/07173
- WO-A-99/60499
- US-A- 4 173 016

## Description

### DOMAINE GENERAL DE L'INVENTION ET ETAT DE LA TECHNIQUE

Les technologies modernes fournissent une abondance de moyens de communication, qui permettent aux individus une connexion quasi permanente à bon nombre de réseaux globaux. La généralisation des téléphones mobiles cellulaires, ou demain celle des téléphones par satellite en est un exemple frappant. Ces moyens de communication n'adressent toutefois qu'un seul des aspects de l'échange d'informations : la mise en communication d'un individu avec l'ensemble du réseau. L'interconnexion d'un groupe d'individu est de ce fait virtuelle, car chaque lien passe nécessairement par un noeud du réseau global.

A contrario, la plupart des transactions humaines passent par une étape de reconnaissance sensorielle directe, à l'occasion d'un rapprochement physique fortuit ou planifié. C'est bien sûr le cas dans la rencontre de deux individus, mais également lors de la quête de ressources. Dans l'ensemble de ces cas, l'action peut se résumer à un rapprochement physique, suivi d'un processus de sélection qui permet aux individus d'identifier les contacts les plus pertinents. Ces mécanismes relationnels, très coûteux en temps et en énergie, sont bien souvent entravés par des blocages innés, ou encore acquis lors de la vie en société. Les moyens de communication globaux ne permettent pas d'inhiber efficacement ces blocages, car ils ne résolvent pas fondamentalement la question de choix objectif du ou des partenaire(s) avec lesquels communiquer. Enfin le recours à un tiers humain ne permet pas en général de s'affranchir des doutes quant à la fiabilité de l'intermédiaire.

Un but général de la présente invention est de proposer un nouveau mécanisme de mise en relation automatique d'individus, sélectif et adaptatif, à d'autres personnes physiques ou encore à des automates. Ce mécanisme de compensation des blocages permet en quelque sorte de « dévirtualiser » le monde cybernétique en y réintroduisant le concept de proximité physique.

Il a déjà été proposé des appareils tels que ceux commercialisés sous la dénomination Lovefinder ou Love-gety qui sont des appareils portables, très compacts, émettant en permanence un signal sélectionné par l'utilisateur lors du réglage et codant un type de relation souhaité (« dinner, talk, fun, flirt, drink » c'est à dire « déjeuner ou dîner, conversation, recherche d'amusement, prendre un verre »). Lorsque deux appareils configurés de la même façon se croisent à moins de quelques mètres de distance, un signal lumineux ou sonore est émis, ce qui est sensé favoriser le rapprochement entre les deux possesseurs de l'appareil.

Néanmoins les capacités de tels dispositifs sont limitées : l'utilisateur ne peut choisir qu'entre quelques critères très simples, présélectionnés par le fabricant et figés.

De plus, l'action déclenchée (signal sonore ou lumineux) reste rudimentaire.

L'amélioration des possibilités de ces appareils passerait par la mise en oeuvre d'une interface utilisateur évoluée, donc encombrante.

II a également été proposé par IBM, dans le cadre d'une démonstration technologique, des dispositifs appelés Thinking Tags (2) qui reprennent sensiblement la même logique, en autorisant plus de souplesse dans le choix des critères : l'utilisateur dialogue par liaison infra-rouge avec un ensemble de bornes, chacune dédiée à un critère. Le jeu de critères peut être modifié en reconfigurant les différentes bornes. Cependant, cette reprogrammation est du ressort de l'exploitant de l'infrastructure et non pas des utilisateurs qui doivent donc adhérer à un même jeu de critères.

Un concept similaire, appelé Hot Badge, a été proposé par Philips Design (3).

Par ailleurs, les dispositifs portables intelligents font l'objet de différentes études.

Notamment, Digital Research travaille sur un projet de dispositifs portables, appelés Factoids (4), chacun capable de détecter des informations émises par d'autres dispositifs identiques pour les réémettre immédiatement vers un serveur. Les données sont ensuite exploitées par l'utilisateur qui dispose ainsi d'une seconde mémoire. Un des inconvénients de ce concept est la non sélectivité de l'acquisition des informations entraînant un travail de dépouillement considérable.

Le Media Lab étudie également un dispositif portable, appelé quant à lui Rememberance Agent (5), permettant, en fonction des circonstances, de proposer à l'utilisateur des informations pertinentes dans le contexte. Le système décrit offre une exploitation astucieuse d'une base de données constituée par l'utilisateur mais ne prévoit pas d'échanges d'informations avec d'autres dispositifs.

Dans la perspective de communication à courte distance, IBM a proposé un système appelé PAN (Personal Aera Network) (6) permettant à deux personnes d'échanger des données (par exemple le contenu d'une carte de visite) via une poignée de mains. Cependant, les possibilités du dispositif sont restreintes à la communication entre deux protagonistes en contact physique, coopératifs, disposés à se serrer la main.

On l'aura compris, ces différents systèmes sont tous limités dans leur application et ne permettent pas la souplesse dans le choix des critères que l'on peut connaître par exemple sur le réseau WWW lorsque l'on utilise les moteurs de recherches nécessaires à l'exploitation de l'immense quantité d'informations disponibles; à condition qu'ils soient connus des moteurs de recherche, toute personne, tout objet, tout service répondant à un jeu de critères très précis peut être trouvé.

Néanmoins, la rencontre reste virtuelle.

La connexion d'un ordinateur portable ou d'un PDA au réseau WWW via une liaison sans fil permet à l'utilisateur de mieux interagir avec son environnement, tout en bénéficiant des données disponibles sur le réseau et de la sélectivité des moteurs de recherche : l'expérience sensible peut ainsi être complétée par des informations trouvées sur le réseau.

Il est possible d'envisager, en reprenant la démarche de Theimer et al (7), une architecture dans laquelle les mobiles sont dotés d'un dispositif de localisation et communiquent entre eux via le réseau , un serveur central connaissant à tout instant la position des mobiles et organisant le routage des informations en conséquence. Si cette architecture est concevable à l'échelle d'un bâtiment, d'une communauté de taille moyenne et d'un réseau local, elle est difficilement implantable à grande échelle : elle nécessiterait en particulier des liaisons permanentes entre tous les mobiles et le réseau cellulaire.

Un autre art antérieur pertinent est WO ØØ11793.

### PRESENTATION GENERALE DE L'INVENTION

L'invention propose quant à elle un système qui ne présente pas les limitations des systèmes de l'état de la technique.

A cet effet, la solution proposée par l'invention est un système selon la revendication 1.

Ce système est avantageusement complétée par les différentes caractéristiques énumérées dans les revendications 2 à 8.

D'autres caractéristiques et avantages de l'invention ressortiront encore de la description qui suit qui est purement illustrative et non limitative et qui doit être lue en regard de la figure unique annexée, sur laquelle on a représenté l'architecture générale d'un système conforme à un mode de réalisation de l'invention.

### DESCRIPTION DE L'INVENTION

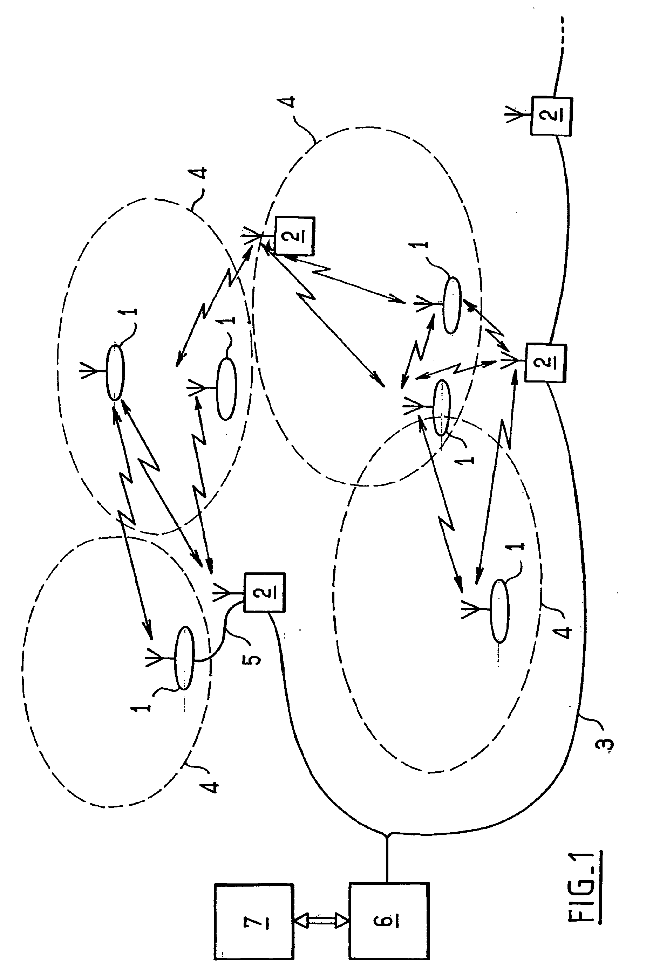

Le système représenté sur la figure 1 comporte un ensemble d'appareils mobiles 1 autonomes, transportés par des individus (ou des véhicules) et une infrastructure comportant un certain nombre de noeuds fixes 2 et permettant la connexion permanente ou temporaire des mobiles 1 à un réseau d'interconnexion global. Les mobiles 1 et les noeuds 2 de l'infrastructure de communication comportent tous également des organes permettant le stockage et le traitement de l'information, et éventuellement des moyens acoustiques, tactiles et visuels d'interaction avec des opérateurs humains. Enfin, les mobiles et certains noeuds du réseau global sont dotés de moyens de communication hertziens ou optroniques permettant la connexion et l'échange d'informations digitales, à courte portée.

### CONCEPTS ET VOCABULAIRE

Dans toute la suite du texte, on utilise la terminologie suivante :
Clefs : données échangées et leur typologie
Méthodes : les moyens d'agir sur les clefs, c'est à dire programmes ou fragments de programmes réalisant sur lesdites clefs (et plus généralement sur les blocs de données dans lesquels lesdites clefs sont encapsulées, le cas échéant avec lesdits programmes ou fragments de programmes) des opérations de mémorisation, duplication, effacement, transmission, comparaison (opération également appelée "différence" par la suite), etc.
Actions : méthode particulière exécutée en réaction à un résultat de différenceles actions induites par toute opération sur ces données.
Caractère : bloc de données structurées, éventuellement comprimées et cryptées, qui contient à la fois des clefs et des méthodes. L'association des clefs et des méthodes (opérateurs) permettant leur traitement autonome est la brique de base qui permet l'implémentation des fonctionnalités décrites en introduction, comme la définition du contexte d'applicabilité lors de la « rencontre » entre deux mobiles porteurs d'une information hétérogène, et des réactions appropriés induites par les opérateurs inclus dans le(s) caractère(s) activé(s). (Par exemple, un type de données particulières, un opérateur de comparaison de ces données avec d'autres données d'un type voisin, et une réaction particulière sur l'interface homme-machine.) Un exemple de structure de tels caractères est donné ci-dessous.

Une opération de comparaison peut être par exemple une évaluation d'une distance topologique abstraite entre deux clefs, en vue de décider de la pertinence d'un éventuel rapprochement entre ces deux clefs.

### COMPOSANTS ELEMENTAIRES

On va maintenant décrire un certain nombre de composants du système de la figure 1, et notamment les organes de communication, les organes de traitement de l'information, de mémorisation, d'interface homme-machine (IHM), diverses interfaces ou capteurs (optionnels) et différentes classes de composants logiciels. Bien entendu, les divers équipements électroniques disposent d'alimentations électriques appropriées (accumulateurs, secteur...).

### Organes de communication

1. Un (ou plusieurs) réseau numérique 3 de communication global, permettant l'échange bidirectionnel d'informations numériques, comme par exemple le réseau Internet (sur ethernet, anneau à jeton, token-ring, ATM...), le réseau de téléphonie filaire commuté (STN), les réseaux numériques de téléphonie sans fil (à la norme GSM, DCS...), ou encore les téléphones satellitaires (Immarsat, Iridium, Teledesic...).
2. Un (ou plusieurs) réseau numérique local de proximité 4, dédié à l'application. Il peut être de nature radio (haute fréquence ou micro-onde) ou optronique (infrarouge).
   Dans tous les cas le mécanisme de transport choisi doit permettre l'acheminement sans interférence de nombreux canaux en parallèle et être tolérant vis à vis de sources de brouillage.
   La capacité à réaliser une connexion logique exclusive de l'un terminal (mobile ou borne) avec un ou plusieurs autres sans interférence est impérative. De surcroît, les technologies permettant de définir plusieurs sous réseaux logiques parmi un ensemble de terminaux, tous dans des zones de couverture radio mutuelle seront préférés.
   Enfin, pour certaines applications, on met en oeuvre un procédé d'évaluation de la distance séparant deux terminaux connectés. Un procédé de connexion radio offrant l'ensemble de ces fonctionnalités est décrit en détail dans les exemples de réalisation.
   Dans les cas où le recours à un réseau purement local ne serait pas souhaitable ou réalisable, en raison de limitations de portée par exemple ou de d'octroi de fréquences, il peut être envisagé « d'émuler » un réseau local au moyen d'un réseau global, à condition de déterminer la proximité physique des terminaux par rapport aux noeuds du réseau global. Dans ce cas, il suffit qu'un serveur centralisé, capable de localiser dans l'absolu et individuellement les terminaux mobiles dans son périmètre de visibilité et donc de calculer leurs éloignement mutuel, ou dans certains cas (réseaux cellulaire par exemple) de décider simplement si deux terminaux mobiles appartiennent à la même cellule de communication, tienne à jour une table répertoriant les mobiles qui vérifient un critère d'éloignement donné (appartenir à la même cellule du réseau, être distant de moins de n mètres par exemple...). Si les informations contenues dans cette table sont accessible à distance par les mobiles, ou si les gestionnaires du réseau effectuent une sélection des mobiles en proximité physique (en les activant préférentiellement par exemple), il est possible d'effectuer des opérations requerrant un critère de proximité sans jamais mesurer directement la distance entre deux terminaux mobiles.
   Par exemple, un réseau cellulaire de type GSM permet de réaliser cette fonction en cherchant simplement dans la table d'appartenance des mobiles aux différentes cellules, table qui est automatiquement actualisée par les stations de base du réseau. Il est alors facile de déterminer des groupes de mobiles appartenant à une même cellule (ou micro-cellule), et donc en proximité physique.
   Certains dispositifs de localisation fine des mobiles à partir des temps de propagation des ondes à au moins trois stations de bases sont également utilisables.
3. Une connexion digitale bidirectionnelle 5 auxiliaire et optionnelle des mobiles aux noeuds fixes du réseau global. Une simple liaison série filaire est possible (RS232), ou encore infrarouge (IrDa), ou inductive... Des interfaces adressés et arbitrés plus évoluées comme USB, ieee 1394 ou SCSI sont également utilisables.

### Organes de traitement de l'information

1. Des calculateurs autonomes notamment au niveau du serveur du réseau (référencé par 6) et des noeuds 1 et 2, permettant l'exécution de programmes, statiques ou dynamiques. Dans les terminaux mobiles, il s'agira le plus souvent d'un microprocesseur basse consommation.
2. Une mémoire, volatile ou non-volatile permettant le stockage et la relecture d'informations numériques. Il est prévu en particulier une base de données 7, qui échange avec le serveur 6 du réseau.
3. Une interface homme machine permettant l'affichage, l'émission de sons et l'entrée manuelle, tactile ou vocale d'informations. Ces systèmes d'interface peuvent être intégrés aux dispositifs mobiles ou encore faire partie d'autres équipements informatiques non-dédiés.
4. Une unité d'encryptage et de décryptage (optionnelle), hardware ou software permettant à la fois un échange sécurisé d'information entre stations fixes et mobiles et éventuellement leur identification auprès du réseau.

### Fonctions électroniques et capteurs divers

1. Dispositif permettant l'attribution d'un numéro d'identification unique à chaque station mobile (ou fixe). Il peut s'agir simplement d'une valeur stockée dans une mémoire morte (ROM), ou pour plus de sûreté d'une « smart card » protégée par un mécanisme d'accès cryptographique
2. Horloge permettant la datation des événements
3. Dispositif de mesure approximative de la distance entre deux mobiles en connexion. Se référer spécifiquement à la section traitant de la mise en connexion de deux mobiles par le réseau de proximité.
4. Système de positionnement absolu global par satellite (GPS) ou dispositif de localisation relatif par rapport aux noeuds physiques du réseau global.
5. Tout capteur permettant la mesure d'une grandeur physique simple (température, pression, champ magnétique...)

### Composants logiciels

1. Système opérateur des stations fixes et mobiles. Ce logiciel assure la gestion des divers organes électroniques, orchestre l'exécution dynamique des programmes (c'est à dire des méthodes), et assure les fonctions vitales des terminaux : connexion & routage des réseaux, transport, gestion dynamique de la mémoire, ou encore exploitation de l'IHM. Cette dernière permettant la représentation de données numériques ou signaux sous une forme intelligible à l'homme, et également l'entrée d'informations par celui-ci.
2. Interpréteur/compilateur de programme, permettant l'interprétation, la sélection et l'exécution des programmes contenus dans les « caractères » . Ces derniers ne sont pas figés et sont re-programmables à volonté, et peuvent être échangés entre les mobiles et les noeuds au moyen du réseau d'interconnexion global.
3. Bases locales de « caractères », embarquées dans les dispositifs mobiles, ou basées dans des calculateurs à poste fixe (bases de données centralisées). Ce composant assure la mémorisation et la restauration des « caractères » manipulés par l'interpréteur/compilateur de programme.
4. Système d'indexation et de cryptographie, permettant la génération de clefs à partir des « caractères » . Ce mécanisme est essentiel pour assurer que les caractères présents dans deux terminaux connectés par le réseau de proximité aient un lien contextuel quelconque. L'indexation permet le transfert d'information sous une forme comprimée optimale. Le recours à un cryptage permet en plus d'éviter la divulgation en clair sur les ondes radio des « caractères » d'un terminal.
5. Système de transport des « caractères » ou de clefs les identifiant par les moyens physiques de communication

### ETAPES PRINCIPALES DE FONCTIONNEMENT

Pour clarifier la présentation, on distingue ci-après trois modes fonctionnels. Toutefois, lorsqu'un dispositif comporte de nombreux terminaux fixes et mobiles en interaction, ces modes coexistent simultanément en divers points du système.

### Programmation et Configuration

Lorsqu'un nouveau terminal, qu'il soit fixe ou mobile, est ajouté au réseau, une étape de pré-programmation est requise. Considérons seulement ici les aspects du systèmes relatifs aux « caractères » proprement dits, et non à l'infrastructure du dispositif global. Bien entendu, les nombreux serveurs qui composent l'épine dorsale du réseau global devront être programmés en conséquence pour assurer les nouvelles fonctionnalités décrites dans ce brevet.

Plusieurs modes de configuration des terminaux sont envisageables :
- Configuration « en ligne » via internet. Dans ce mode, les « caractères » sont générés mécaniquement par une combinaison de choix effectuée par l'utilisateur via un « formulaire web », ou encore fabriqués dynamiquement « au vol » par le serveur web (comme du CGI) en fonctions de paramètres accessibles au serveur. Bien entendu, la connexion avec ou sans fil à un noeud du réseau global est requise dans ce mode. On peut considérer dans ce mode que les terminaux mobiles sont programmés par des informations générées par ou stockées sur les serveurs du réseau global.
- Configuration via I'IHM (Interface Homme machine) des terminaux mobiles. Dans ce mode, la configuration peut être effectuée in situ, ce qui en fait son attrait. L'utilisateur, par un enchaînement de choix de paramètres, « configure » un paramètre type pré-éxistant dans son terminal mobile.
- Automatique, suite à la réception d'un « caractère » préexistant émis par un terminal tiers après qu'un canal de communication ait été établi avec ce dernier. Ce mécanisme permet donc la « reprogrammation » automatique d'un terminal distant et la transmission d'une fonctionnalité « acquise » via le réseau.

### Fonctionnement des terminaux mobiles en mode interactif

A l'issue de l'étape de configuration des terminaux mobiles, chaque dispositif mobile actif émet périodiquement des séquences d'interrogation particulières permettant leur identification auprès d'autres mobiles ou stations fixes : ce mécanisme permet l'établissement de connexions locales, qui définissent un ensemble de liens point à point, encore nommé sous-réseau (réseaux locaux 4). Les dispositifs mobiles échangent alors de manière bidirectionnelle, avec leurs plus proches voisins inclus dans la « bulle » d'intercommunication physique et logique, des clefs caractéristiques des caractères stockés dans leurs mémoires respectives. Les différents noeuds (balises 2, mobiles 1) du réseau peuvent être programmés, éventuellement à distance à partir du serveur 4 ou d'un autre terminal, pour n'autoriser l'intercommunication que lorsque certaines conditions de contexte sont réunies, ces conditions étant vérifiées par exemple en utilisant l'information issue des capteurs auxiliaires. Une telle condition est par exemple une condition sur la distance qui sépare chacun des terminaux du sous-réseau. Cela peut être accompli en mesurant la puissance RF ou optiqué détectée, ou encore en mesurant le temps de propagation des signaux électromagnétiques.

Si les échanges entre les mobiles assurent que certains caractères associés à au moins deux mobiles sont compatibles deux à deux, les actions correspondantes sont alors déclenchées.

L'enchaînement des étapes requises à une telle transaction est le suivant :
- Sélection par les terminaux initiateurs : cette étape, initiée par un terminal actif 1 ou 2, vise à la détermination des mobiles ou noeuds fixes susceptibles d'être en contact radio avec celui-ci, et ne constitue nullement une garantie que les terminaux aient une information pertinente à échanger (en effet, cela requiert dans la plupart des cas qu'un programme s'exécute dans le terminal potentiellement cible, ce dernier n'étant pas nécessairement réceptif à cet instant). Toutefois, afin de limiter le trafic radio et de diminuer le nombre de mobiles en connexion simultanée, les séquences de réveil pourraient contenir des clefs distinguant différents modes de veille. Cela est impératif si le standard utilisé pour communiquer implique d'autres types d'équipements que des terminaux Du système, qui doivent « parler » impérativement à d'autres terminaux Du système. En effet, comme le dispositif repose sur des moyens de communication radio numériques standardisés, d'autres équipements peuvent avoir à partager la bande. Aussi, il est nécessaire de procéder à une identification préalable de la nature des appareils en présence. Dans le standard « Bluetooth » par exemple, cela est réalisé juste après la phase d'initiation de la séquence de saut de fréquence pseudo aléatoire par échange mutuel entre les mobiles d'une clef brève décrivant les capacités du terminal. Ces descriptions, en un mot, contiennent une information sur la catégorie de terminal « bluetooth » (casque, camera video, imprimante...) et le type de données attentues (flux audio ou video, données imprimables...). Les terminaux Du système constitueraient simplement une nouvelle catégorie de terminaux, manipulant des données plus ou moins hermétiques aux autres catégories.
- Réveil des terminaux esclaves : l'électronique des terminaux cible effectue une veille « passive » de certains canaux. Lorsque la radio reçoit une séquence de réveil particulière en provenance d'un terminal actif 1 à spectre large (pseudo aléatoire), le calculateur du terminal est « réveillé » et la séquence lui est soumise. Si la clef de réveil correspond à une classe de dispositifs adéquate, le terminal « réveillé » émet alors une réponse convenue pour informer l'initiateur de son nouvel état. Dans le cas de réseaux radio utilisant des technologies de type I il est en général nécessaire à ce stade de synchroniser les séquences pseudo-aléatoires d'émission des terminaux entre elles. Ces étapes liminaires de préconnexion sont en général implémentées soit par l'utilisation de canaux de contrôles dédiés (GSM) soit par des techniques de scrutation systématique des canaux pour la détection des séquences de connexion (Bluetooth). Dans tous les cas, l'établissement d'une voie de communication, logique ou physique, indépendante du trafic principal est nécessaire. A l'issue de cette étape, les radios des terminaux sont capables d'échanger de l'information (bien que de manière non absolument fiable du fait des collisions ou de brouillages) mais la connexion logique n'est pas effectuée.
- Emission d'un critère de connexion & Gestion des cotisions : le terminal initiateur émet alors dans le canal de communication principal nouvellement ouvert certaines informations afin d'assurer la connexion logique, c'est à dire l'identification des terminaux en connexion. Cela est en général réalisé au moyen d'une clef unique à chaque appareil. Cette clef peut bien entendu contenir des informations permettant une communication hiérarchiques de certaines classes de terminaux. A ce stade, et pour l'ensemble des communications logiques, les collisions (lorsque plusieurs terminaux émettent simultanément) sont automatiquement détectées en ajoutant au message transmis un protocole permettant la vérification de l'intégrité du message transmis et même une correction automatique des erreurs grâce à une certaine redondance (codes de correction d'erreurs). Les données peuvent également être cryptées avant transmission et décryptées par le receveur.
- Connexion simultanées de plusieurs sous-réseau : du fait de l'identification unique des terminaux, ce type de mise en connexion permet même la définition de sous-réseaux de terminaux connectés entre eux, mais logiquement indépendants (DECT, Bluetooth, HomeRF).
- Echange des clefs relatives aux « caractères » : conformément au programme embarqué dans les terminaux mobiles, une première liste de clefs propres aux « caractères » actifs dans le terminal initiateur est émise en direction des autres terminaux connectés.
- Comparaison des clefs : comparaison automatique ou semi-automatique des clefs transmises aux clefs des « caractères » locaux contenues dans les mobiles cible. La compatibilité des clefs («matching») est évaluée au moyen de méthodes de calcul des « différences » incluses dans les « caractères » locaux eux-mêmes. Ces méthodes ne sont autre que des « actions » particulières. Cette évaluation peut être simple (comparaison des clefs à l'identique) ou plus complexe (mise en oeuvre de calcul d'espérances baylésiennes), surtout si les « caractères » sont composés eux-mêmes de sous-caractères (cf. exemple de réalisation).
- Déclenchement des « actions » associées aux « caractères ». Les actions déterminées par les résultats calculés par les programmes inclus dans les « caractères » entraînent l'activation de fonctions systèmes ou logicielle des terminaux. L'échange d'information peut donc déclencher l'intervention d'un opérateur humain, en réponse à un message ou signal d'avertissement, ou encore entraîner une action automatique. Les opérateurs humains peuvent également modifier le comportement global du système via le réseau global, en décidant à tout moment de la reprogrammation à distance des agents mobiles ou fixes en décidant de l'envoi en retour d'un « caractère » approprié.

### Exploitation des interactions

Cette étape fonctionnelle ressemble en réalité aux opérations de configuration. Dans bien des cas, les deux étapes seront effectués simultanément, les résultats antérieurs pouvant décider de la nouvelle programmation, par téléchargement de nouveaux « caractères », des terminaux.
- On line, sur le web
- Lors des reconnexions épisodiques des terminaux mobiles au réseau global, ceux-ci peuvent, en activant certaines de leurs méthodes par défaut, se connecter via le protocole de transport du réseau global à des serveurs « web » identifiés (à partir d'informations appropriées transportées dans les « caractères ») munis d'extensions logicielles (« plug-ins ») adaptés à l'exploitation des « caractères ». Ces « plug-ins » assurent en fait l'interface entre la machinerie des « caractères » et les librairies du web-browser.
- Dès lors, l'exécution d' « actions » particulières des « caractères » transmis va permettre l'interaction de l'utilisateur via l'interface usuelle du web-browser hôte.
- Via I'IHM des terminaux (parfois un simple signal sonore)
- Le mécanisme est semblable au précédant à ceci près que les « actions » de visualisation et d'entrée utilisateur sont prises en charge par l'opérating system embarqué des terminaux.
- Via d'autres dispositifs (téléphones, machinerie...)
- Dans certaines applications, l'activation des « actions » peut servir à activer ou contrôler un appareil, ou encore déclencher l'ouverture automatique d'une ligne GSM par exemple.

### EXEMPLES PARTICULIERS

On décrit ci-après, à titre d'illustration, un exemple d'application particulier.

### TERMINAUX, POINTS D'ACCES ET INFRASTRUCTURE

### Terminaux mobiles

Dans cet exemple les terminaux mobiles sont constitués de téléphones portables GSM. Ces appareils sont donc capables de se connecter au réseau téléphonique GSM et par voie de conséquence à n'importe quel serveur web via un point d'accès. Le réseau GSM est donc dans cet exemple utilisé pour permettre la connexion des terminaux au web. Ils sont également capables d'exécuter des logiciels propriétaires dédiés à la plate-forme et l'opérating système embarqué assure les services usuels d'affichage, d'entrée de commandes utilisateur, de contrôle du combiné, des fonctions de mémorisations... En outre, les téléphones portables utilisés sont dotés de moyens capables d'exécuter le langage « Java » utilisé pour l'écriture du code exécutable contenu dans les « caractères ».

Ces téléphones portables qui constituent les terminaux mobiles sont également dotés d'un émeteur-récepteur radio au standard couramment désignés sous la terminologie "bluetooth" (lien-radio-numérique-auto-adressable), capable donc de se connecter et de se déconnecter automatiquement suivant les instructions des programmes à d'autres équipement répondant au même standard. « Bluetooth » est donc utilisé ici en tant que réseau de proximité, les connexions entre mobiles se produisant au gré du déplacement de ceux-ci. Rappelons que ce dernier moyen de communication est totalement indépendant de la connexion usuelle des téléphones au réseau cellulaire.

### Serveurs et réseau global

Dans cet exemple, l'infrastructure usuelle du réseau Internet (web) sera utilisée, c'est à dire une nébuleuse de clients et de serveurs totalement inter-connectés, échangeant leurs informations grâce à TCP/IP. Les serveurs du réseau sont accessibles via des adresses statiques. Clients et serveurs exécutent des applications de type browser et server, toutes supposées capable d'exécuter les applications « Java » téléchargée.

### FONCTIONNALITES ET INTERACTIONS DES DIFFERENTS MODULES ET LOGICIEL DE CONNEXION

### Module principal des terminaux mobiles

Ce programme, identique pour l'ensemble des terminaux mobiles, contrôle les fonctionnalités propres au système. Il assure :
1. Le contrôle de la radio « locale » bluetooth
   - Initiation automatique des connexions (par balayage périodique des canaux appropriés)
   - Mise à jour des sous-réseaux actifs
2. La gestion de la boucle d'événement principale du système
   - Chargement et déchargement des « caractères » en fonction des connexion TCP/IP issues du web ou encore de « caractères » téléchargés à partir d'autres mobiles
   - Fabrication de nouveaux « caractères » ou de variantes à partir de données locales
   - Exécution appropriée du code contenu dans les « caractères » locaux actifs
3. L'interface aux fonctions propres de l'OS de la plate-forme
   - Via l'exécution de méthodes par défaut (par exemple : boite de dialogue élémentaire, gestion du téléphone, interface au « filesystem », à d'autres périphériques annexe, aux fonctions de téléphonie et à la connexion TCP/IP au web par le point d'accès GSM au moyen d'un protocole comme PPP...)

### Module principal des serveurs-web

Ce programme s'insère dans le serveur sous la forme d'une connexion propre au système et assure les fonctionnalités suivantes :
1. Contrôle centralisé des « caractères » propre au site web du serveur concerné
   - Réponses aux requêtes de Chargement & déchargement des « caractères » contenus dans les pages web (de manière statique ou non), ou encore routées à partir de bases de données externes
   - exécution appropriée du code contenu dans les « caractères » locaux actifs
2. Génération dynamique de pages web en réponse à des « actions » particulières contenues dans les « caractères » (affichage d'une boite de dialogue standard sur un post client connecté au serveur)
3. Réciproquement, fabriquer de nouveaux « caractères » ou de variantes à partir de données locales.

### LES « CARACTERES » DU SYSTEME

Ainsi que cela a déjà été indiqué, ces objets comprennent à la foi des « programmes », des « données » associées, et des « clefs » ou index déterminant la compatibilité des données et des programmes, sont

Les seules contraintes qui s'exercent sur ces objets sont :
1. Les « caractères » peuvent contenir toutes sortes de données usuelles ainsi que d'autres caractères
2. A chaque caractère est associé un ensemble d' « actions », qui sont en fait soit des programmes agissant soit sur ce même caractère ou sur d'autres caractères. Ces « actions » peuvent également déclencher et contrôler des événements ou des actions extérieurs (cette dernière fonctionnalité en fait des device-drivers virtuels)
3. Chaque caractère doit contenir une « clef » permettant d'en caractériser le type et la filiation (dans le cas de caractères imbriqués).
4. Chaque caractère doit impérativement contenir un certain nombre d'actions par défaut dont les plus importantes sont :
   - La destruction du caractère qui y est attaché
   - La génération de la « clef » unique
   - La vérification de compatibilité d'une « clef » donnée aux « actions » du caractère courant, afin de garantir que les actions d'un caractère puisse correctement agir sur d'autres caractères (afin d'effectuer par exemple une comparaison de leurs données respectives)

### ILUSTRATION SUR UN EXEMPLE SIMPLE : UNE TRANSACTION SIMPLE

Supposons dans cet exemple canonique que l'on souhaite répondre à un problème d'offre et de demande : certains terminaux ont une liste d'objets à offrir et d'autres en sont au contraire demandeur. Le système permet par exemple de déclencher automatiquement des propositions de transactions, au fil des connexions de proximité entre vendeurs et acheteurs.

### 1. Génération des « caractères »

Supposons que deux types prédéfinis de caractères les « vendeurs » et les « acheteurs » soient préprogrammés dans les terminaux mobiles (ou bien encore qu'ils aient été téléchargés à partir d'un serveur :
« caractère » Vendeur, clef 1,
   actions =
   - « vendre (génériquement)»
   - « est-ce une clef d'acheteur ? compatible clef 2 ?»
« caractère » Acheteur, clef 2,
   actions =
   - « acheter (génériquement)»
   - « est-ce une clef de vendeur compatible clef 1 ? »
« caractères » Cube, Sphère, Cône, clefs 3.1 3.2 3.3
   actions =
   - « la clef fournie est-elle compatible avec le « caractère » de type 3.x »
   - « vendre l'objet à mon contact et en évaluer l'intérêt (construit à partir de la fonction générique)»
   - « acheter l'objet à mon contact et en évaluer l'intérêt (construit à partir de la fonction générique)»

Chaque utilisateur de terminal va alors programmer au moyen d'une interface utilisateur quelconque web ou HIM une liste de « caractères » vendeurs et acheteurs contenant eux mêmes plusieurs instances de « caractères » Cubes, Sphères et/ou « Cônes » et la mémoriser

### 2. Phase de veille

Comme expliqué plus haut, chaque terminal, qu'il soit vendeur ou acheteur, va tenter périodiquement d'établir une connexion avec d'autres terminaux.

Lorsque deux terminaux seront assez proches pour dialoguer, l'initiateur va émettre la liste des clefs correspondant aux « caractères principaux » (i.e. contentant les autres caractères). Le récepteur va alors vérifier la compatibilité de ces clefs avec les « actions » contenues dans ses propres « caractères principaux » : ainsi les transactions impossibles comme l'achat d'un objet qui n'est pas à vendre sont automatiquement évitées sans qu'il soit nécessaire de transmettre en détail la hiérarchie des caractères eux-mêmes. Ensuite, dans cet exemple, les transactions potentiellement valides vont automatiquement déclencher la vérification récursives des sous- « caractères » contenus dans les « caractères principaux »

### 3. Transaction proprement dite

Suivant le détail de l'implémentation, Vendeur et/ou Acheteur vont alors mutuellement appliquer, dans les cas où les clefs caractérisant les objets Cubes, Sphères et Cône coïncident, leur fonction d'évaluation de la pertinence à réaliser la transaction. Dans cet exemple simple ces fonctions sont identiques pour toutes les instances des objets contenus dans les « caractères vendeurs ou acheteurs ». Si la transaction doit se réaliser (le détail de l'arbitrage pouvant pendre de multiples formes), les activations respectives des action de vente pour le vendeur, et d'achat pour l'acheteur permettent la transmission effective du « caractère » approprié.

### AUTRES EXEMPLES D'APPLICATIONS PLUS SOPHISTIQUEES

### Applications de « matching » dépendantes du contexte

Pour certaines applications, il est nécessaire de raffiner le modèle d'échange précédant. Bien souvent, les conditions de la mise en relation des mobiles dépendent de facteurs extérieurs, comme par exemple le cours d'une monnaie, l'heure, l'état d'un inventaire. Celles ci peuvent encore varier suivant la valeur de paramètres propres au mobile mais pouvant varier dans le temps, comme par exemple le solde d'un porte-monnaie électronique.

L'exemple générique du paragraphe précédent doit être modifié afin que les fonctions d'évaluations pertinentes puisse prendre en compte les valeurs de ces paramètres variables.

Dans le cas de paramètres totalement extérieurs aux mobiles, c'est a dire mémorisés ou calculés sur les ordinateurs des bases de données connectées aux serveurs du réseaux global, chaque transaction va requérir que le ou les mobiles en présence et identifiés comme tel contactent un des serveurs du réseau global. Ce dernier va alors permettre l'acheminement d'une requête (solde, état, inventaire...) à destination de la base de données contentant l'information, et de la réponse à cette requête, permettant ainsi aux fonctions d'évaluation de conclure ou non la transaction. Ce mécanisme nécessite bien sur que les coordonnées informatiques de la dite base de donnée soient contenues intégralement ou par parties dans les caractères échangés.

Lorsqu'il s'agit de paramètres internes, il suffit de réaliser un échange préalable de caractères entre les mobiles avant la transaction proprement dite, afin de « synchroniser » les deux terminaux sur la valeur du paramètre étranger à l'un deux.

### Offre et demande simultanée

Parfois, il n'est pas souhaitable d'identifier l'un ou l'autre des terminaux à la fonction spécifique « d'acheteur » ou de « vendeur ». Du fait que les caractères peuvent très bien contenir autant de critères individuels que souhaité, il est tout à fait possible d'associer les fonctions «d'achat » et de «vente » au sein du même caractère, et ce pour chacun des deux mobiles. Les transactions seront dans ce cas parfaitement symétriques, chaque mobile pouvant être « vendeur », « acheteur », ou les deux concomitamment. Une application directement dérivée de cette variante est par exemple la fonction de prise de rendez-vous automatique, pour laquelle il est nécessaire de faire coïncider deux ensembles disjoints de contraintes qui ne peuvent être communiqués intégralement et mutuellement aux intéressés pour des raisons de confidentialité.

### Agent de mémoire latente

Comme les utilisateurs du système transporteront avec eux le dispositif , il est possible d'utiliser la persistance des données embarquées dans les terminaux mobiles, de manière à suppléer à la volatilité (éventuelle) de la mémoire humaine. C'est le rôle traditionnel de la « liste de commissions », qui peut être réalisé ici de manière beaucoup plus souple et systématique : l'utilisateur mémorise au préalable (par la définition d'un caractère approprié) une requête contenant en substance la phrase « je suis à la recherche du produit X ».

Aussi longtemps que le caractère persistera dans la mémoire électronique du mobile, l'utilisateur pourra être informé dans l'instant que sa requête, depuis longtemps oubliée, a enfin été satisfaite.

### Publicité dynamique personnalisée

Du fait que le système émet périodiquement des clefs qui résument l'état de la liste des caractères stockés localement, il est possible pour un tiers d'utiliser cette information, sous réserve bien entendu que l'utilisateur ait correctement activé une telle fonction par le chargement d'un caractère approprié.

On peut imaginer par exemple que l'utilisateur ait mémorisé un caractère contenant par exemple l'information « je suis à la recherche du produit X ». Si l'utilisateur passe, dans un magasin par exemple ou encore un lieu public, à proximité immédiate d'une borne contenant une terminal Du système connecté de façon au réseau global (une telle borne serait comparable à un terminal mobile fixé à un emplacement immuable), et si le terminal fixe est lui-même relié à un dispositif d'affichage électronique et doté d'une « action » d'affichage approprié, il est possible de déclencher l'affichage d'un message personnalisé, adapté au profil du consommateur. La b nature du message pourrait bien sur dépendre de facteurs extérieurs comme l'ensoleillement, ou encore l'état du stock du magasin.

### Relais automatique de « caractères » et recherche distribuée

Le système reposant sur un interaction de terminal à terminal, il peut être intéressant d'accroître la probabilité de compatibilité (« matching ») entre mobiles, au delà de leur portée radio. Pour se faire, on peut décider d'utiliser d'autres mobiles tiers comme « relais ». Supposons à titre d'exemple que deux terminaux soient demandeur du même type de caractère. Lors de la transaction automatique entre ces terminaux, la similitude peut être détectée et entraîner une copie automatique et réciproque du caractère demandé, tout en gardant la trace de l'émetteur d'origine du caractère. Au cours des déplacements ultérieurs des mobiles, ce n'est plus un mais deux terminaux qui vont participer à la recherche du « caractère », doublant du même coup la probabilité de voir la recherche aboutir. Si les terminaux auxquels la requête a été transmise sont eux mêmes autorisés à la propager la probabilité de succès augment exponentiellement. Dés qu'un « match » a été trouvé, comme les messages conservent la trace de l'émetteur, il est facile d'activer une action acheminant les réponses au demandeur originel. Une telle recherche récursive nécessite (à la différence d'un virus informatique) que la recherche puisse être stoppée ou en tout cas limitée. Une manière simple d'interdire tout débordement explosif est de limiter le nombre de copie du caractère initial qui peut être réalisé lors de la transmission.

### REFERENCES

(1) http://www.lovefinder-europe.com
(2) IBM, Systems Journal, Vol 35, No. 3&4, 1996, MIT Media Lab : Things that blink : Computationally augmented name tags.
(3) http://www.design.philips.com/vof/vofsite3/vof3lev1/badg1/badg
(4) http://www.research.digital.com/wrl/projects/Factoid/index.html
(5) http:/rhodes.www.media.mit.edu/people/rhodes/Rememberance-distribution/
(6) L'usine nouvelle, Novembre 1998, page 32, Le corps humain comme mot de passe
(7) Brevets américains : US5493692 et US5812865, US5611050, US5603054, US5555376, US5544321.

## Revendications

1. Système d'intercommunication sélective comportant une pluralité de terminaux mobiles qui sont aptes à être portés par une pluralité d'utilisateurs et qui comportent des moyens leur permettant de communiquer, lorsqu'ils se trouvent à proximité l'un de l'autre, ainsi que des moyens leur permettant de vérifier que les des données qu'ils échangent vérifient des critères de compatibilité pour lesquels lesdits terminaux ont été programmés, comportant un serveur (6) qui est apte à dialoguer avec les terminaux mobiles pour leur transmettre des données et les programmer et avec lequel les utilisateurs peuvent se connecter par l'intermédiaire d'un réseau global, tel que le réseau Internet, afin de configurer les terminaux mobiles (1), par l'intermédiaire dudit serveur (6), la communication entre deux terminaux mobiles (1) n'étant autorisée que lorsqu'une condition de proximité entre les deux terminaux (1) est vérifiée, les terminaux mobiles (1) communiquant dans un réseau local (4), le cas échéant émulé au moyen d'un réseau global (2),
**caractérisé en ce que** les terminaux mobiles sont adaptés pour échanger des caractères qui sont des blocs de données structurées qui contiennent à la fois des clés et des méthodes, les clés étant des données échangées en vue de la vérification des critères de compatibilité, les méthodes étant des programmes ou fragments de programme réalisant des opérations sur les clés, un nouveau terminal (1) ajouté au réseau local (4) étant reprogrammé automatiquement à réception d'un caractère émis par un terminal mobile (1) du réseau local (4).

2. Système selon la revendication 1, **caractérisé en ce que** les terminaux mobiles (1) comportent une Interface Homme Machine permettant à un utilisateur de les configurer directement.

3. Système selon l'une des revendications précédentes, **caractérisé en ce que** les terminaux mobiles (1) comportent des capteurs de mesure de grandeurs physiques et **en ce que** la communication entre deux terminaux mobiles (1) n'est autorisé que lorsqu'une condition relative à au moins l'une de ces grandeurs physiques est respectée.

4. Système selon l'une des revendications précédentes, **caractérisé en ce qu'**un terminal mobile (1) comporte des moyens pour l'émission d'un signal de réveil, ainsi que des moyens pour l'émission d'un signal en réponse de la détection d'un tel signal de réveil.

5. Système selon l'une des revendications précédentes, **caractérisé en ce qu'**il comporte une pluralité de terminaux fixes (2) avec lesquels les terminaux mobiles (1) sont aptes à dialoguer.

6. Système selon la revendication 5, **caractérisé en ce que** les terminaux fixes (2) comportent des moyens d'affichage aptes à afficher des données reçues d'un terminal mobile (1).

7. Système selon l'une des revendications précédentes, **caractérisé en ce qu'**un terminal mobile (1) comporte des moyens lui permettant de ré émettre des données reçues d'un terminal mobile (1) tiers.

8. Système selon l'une des revendications précédentes, **caractérisé en ce qu'**un terminal mobile (1) comporte des moyens mémoires dans lesquels des données correspondant à une requête formulée par l'utilisateur du terminal mobile (1) persistent tant que qu'elle n'a pas été satisfaite.

## Claims

1. System for selective intercommunication comprising a plurality of mobile terminals (1) which are able to be carried by a plurality of users and which comprise means allowing them to communicate, in particular when they are located in proximity to one another, as well as means allowing them to verify that data which they exchange satisfy compatibility criteria for which said terminals have been programmed, comprising a server (6) which is able to communicate with the mobile terminals (1) so as to send them data and program them and with which the users can connect by way of a global network, such as the Internet network, in order to configure the mobile terminals (1), by way of said server (6), the communication between two mobile terminals (1) being authorized only when a condition of proximity between the two terminals (1) is satisfied, the mobile terminals (1) communicating in a local network (4), if appropriate emulated by means of a global network (2),
**characterized in that** the mobile terminals (1) are adapted for exchanging characters which are blocks of structured data which contain both keys and procedures, the keys being data exchanged in order to verify the compatibility criteria, the procedures being programs or program fragments carrying out operations on the keys, a new terminal (1) added to the local network (4) being reprogrammed automatically on receipt of a character sent by a mobile terminal (1) of the local network (4).

2. System according to Claim 1, **characterized in that** the mobile terminals (1) comprise a Man Machine Interface allowing a user to configure them directly.

3. System according to either of the preceding claims, **characterized in that** the mobile terminals (1) comprise sensors for measuring physical quantities and **in that** communication between two mobile terminals (1) is authorized only when a condition relating to at least one of these physical quantities is complied with.

4. System according to one of the preceding claims, **characterized in that** a mobile terminal (1) comprises means for transmitting a wakeup signal, as well as means for transmitting a signal in response to the detection of such a wakeup signal.

5. System according to one of the preceding claims, **characterized in that** it comprises a plurality of fixed terminals (2) with which the mobile terminals (1) are able to communicate.

6. System according to Claim 5, **characterized in that** the fixed terminals (2) comprise display means able to display data received from a mobile terminal (1).

7. System according to one of the preceding claims, **characterized in that** a mobile terminal (1) comprises means allowing it to retransmit data received from a third party mobile terminal (1).

8. System according to one of the preceding claims, **characterized in that** a mobile terminal (1) comprises memory means in which the data corresponding to a request formulated by the user of the mobile terminal (1) persists for as long as it has not been satisfied.

## Patentansprüche

1. System zur selektiven gegenseitigen Kommunikation, das eine Vielzahl mobiler Terminals (1) umfasst, die imstande sind, von einer Vielzahl von Benutzern getragen zu werden und die Mittel umfassen, die es ihnen erlauben zu kommunizieren, vor allem wenn sie sich in Nähe zueinander befinden, sowie Mittel, die es ihnen erlauben zu überprüfen, dass Daten, die sie austauschen, Kompatibilitätskriterien überprüfen, für die die Terminals programmiert wurden, einen Server (6) umfassend, der imstande ist, mit den mobilen Terminals (1) einen Dialog zu führen, um ihnen Daten zu übertragen und sie zu programmieren und mit dem sich die Benutzer über ein globales Netzwerk verbinden können, wie dem Internet-Netzwerk, um die mobilen Terminals (1) über den Server (6) zu konfigurieren, wobei die Kommunikation zwischen zwei mobilen Terminals (1) nur dann gestattet ist, wenn eine Bedingung der Nähe zwischen den zwei Terminals (1) überprüft ist, wobei die mobilen Terminals (1) in einem lokalen Netzwerk (4) kommunizieren, gegebenenfalls mit einem globalen Netzwerk (2) emuliert, **dadurch gekennzeichnet, dass** die mobilen Terminals (1) geeignet sind, Zeichen auszutauschen, die strukturierte Datenblöcke sind, die sowohl Schlüssel und Methoden enthalten, wobei die Schlüssel im Hinblick auf die Überprüfung der Kompatibilitätskriterien ausgetauschten Daten sind, wobei die Methoden Programme oder Programmfragmente sind, die Operationen auf diesen Schlüssel durchführen, wobei ein neues, dem lokalen Netzwerk (4) hinzugefügtes Terminal (1) automatisch auf Empfang eines von einem mobilen Terminal (1) des lokalen Netzwerks (4) gesendeten Zeichens programmiert ist.

2. System nach Anspruch 1, **dadurch gekennzeichnet, dass** die mobilen Terminals (1) eine Mensch-Maschine-Schnittstelle umfassen, die es einem Benutzer erlaubt, sie direkt zu konfigurieren.

3. System nach einem der vorangehenden Ansprüche, **dadurch gekennzeichnet, dass** die mobilen Terminals (1) Sensoren zum Messen physikalischer Größen umfassen und **dadurch**, dass die Kommunikation zwischen zwei mobilen Terminals (1) nur dann gestattet ist, wenn eine Bedingung relativ zu mindestens einer der physikalischen Größen eingehalten ist.

4. System nach einem der vorangehenden Ansprüche, **dadurch gekennzeichnet, dass** ein mobiles Terminal (1) Mittel zum Senden eines Wecksignals umfasst sowie Mittel zum Senden eines Signals als Antwort auf den Empfang eines derartigen Wecksignals.

5. System nach einem der vorangehenden Ansprüche, **dadurch gekennzeichnet, dass** es eine Vielzahl fester Terminals (2) umfasst, mit denen die mobilen Terminals (1) zu Dialogen imstande sind.

6. System nach Anspruch 5, **dadurch gekennzeichnet, dass** die festen Terminals (2) Anzeigemittel umfassen, die imstande sind, von einem mobilen Terminal (1) empfangene Daten anzuzeigen.

7. System nach einem der vorangehenden Ansprüche, **dadurch gekennzeichnet, dass** ein mobiles Terminal (1) Mittel umfasst, die es ihm erlauben, die von einem dritten mobilen Terminal (1) empfangenen Daten erneut zu senden.

8. System nach einem der vorangehenden Ansprüche, **dadurch gekennzeichnet, dass** ein mobiles Terminal (1) Speichermittel umfasst, in denen Daten, die einer vom Benutzer des mobilen Terminals (1) formulierten Anfrage entsprechen, verbleiben, solange diese nicht beantwortet wurde.
